# EUROPÄISCHE PATENTANMELDUNG

(11) **EP 2 962 826 A1**
(43) Veröffentlichungstag der Anmeldung: **06.01.2016**
(21) Anmeldenummer: 15173514.9
(22) Anmeldetag: 24.06.2015
(51) Int. Cl.: B29C 33/76, B29C 45/16

(54) **VORRICHTUNG ZUM SPRITZGIESSEN VON KUNSTSTOFFTEILEN**

(30) Priorität: 30.06.2014 DE 102014109126
(71) Anmelder: Phoenix Contact GmbH & Co. KG, 32825 Blomberg (DE)
(72) Erfinder: RIDDER, Carsten, 32676 Lügde (DE); DOMACK, Nils, Dörentrup-Hille 32694 (DE); FLACHMANN, Stefan, 33813 Oerlinghausen (DE)
(74) Vertreter: Janke, Christiane

(57) **Zusammenfassung**

Die Erfindung betrifft eine Vorrichtung zum Spritzgießen von Kunststoffteilen, mit einem Werkzeugteil (1), das zur Bildung eines mit Spritzgussmasse befüllbaren Formraumes (R) sowie zur Freigabe eines in dem Formraum (R) erzeugten Kunststoffteiles relativ zu einem zweiten Werkzeugteil (2) entlang einer Verfahrachse (A) zwischen einer geschlossenen und einer geöffneten Position verfahrbar ist. Dabei ist an dem einen Werkzeugteil (1) mindestens ein Formeinsatz (32) gelagert, der gemeinsam mit dem einen Werkzeugteil (1) entlang der Verfahrachse (A) verfahrbar ist und der in der geschlossenen Position des einen Werkzeugteiles (1) den Formraum (R) abschnittsweise begrenzt, wobei der Formeinsatz (32) mit mindestens einem Längenänderungselement (4) in Verbindung steht, dessen Ausdehnung entlang mindestens einer Raumrichtung (A) veränderbar ist, um die Lage des Formeinsatzes (32) an dem einen Werkzeugteil (1) einzustellen. Dabei begrenzt der Formeinsatz (32) - bei geschlossener Position des einen Werkzeugteiles (1) - in mehreren mittels des mindestens einen Längenänderungselementes (4) einstellbaren Positionen an dem einen Werkzeugteil (1) den Formraum (R) jeweils derart, dass dieser durch den Formeinsatz (32) dichtend verschlossen ist.

## Beschreibung

Die Erfindung betrifft eine Vorrichtung zum Spritzgießen von Kunststoffteilen nach dem Oberbegriff des Anspruchs 1.

Eine derartige Vorrichtung umfasst ein erstes und ein zweites Werkzeugteil, wobei das erste Werkzeugteil zur Bildung eines mit Spritzgussmasse (z.B. einer Kunststoffschmelze) befüllbaren Formraumes sowie zur Freigabe eines in jenem Formraum aus der Spritzgussmasse erzeugten Kunststoffteiles relativ zu dem zweiten Werkzeugteil der Vorrichtung entlang einer als Entformungs- oder Verfahrachse bezeichneten Achse zwischen einer geschlossenen und einer geöffneten Position verfahrbar ist.

Für bestimmte Anwendungen werden sehr hohe Anforderungen an die Genauigkeit durch Spritzgießen hergestellter Kunststoffteile gestellt. Dies gilt beispielsweise dann, wenn eine Mehrzahl derartiger Teile zu einer Baueinheit zusammengefasst werden soll, so dass sich Fertigungstoleranzen addieren.

Der Erfindung liegt das Problem zugrunde, eine Vorrichtung zum Spritzgießen von Kunststoffteilen zu schaffen, die gezielt eine hochgenaue Herstellung der Kunststoffteile ermöglicht.

Dieses Problem wird erfindungsgemäß durch die Schaffung einer Vorrichtung mit den Merkmalen des Anspruchs 1 gelöst.

Danach ist an dem einen Werkzeugteil mindestens ein Formeinsatz gelagert, der gemeinsam mit jenem Werkzeugteil entlang der Verfahrachse relativ zu dem zweiten Werkzeugteil verfahrbar ist und der in der geschlossenen Position des einen Werkzeugteiles (in welcher dieses zusammen mit dem zweiten Werkzeugteil einen Formraum bildet) den Formraum abschnittsweise begrenzt, wobei der Formeinsatz mit mindestens einem - als Aktor wirkenden - Längenänderungselement (unmittelbar oder mittelbar) in Verbindung steht, dessen Ausdehnung entlang mindestens einer Raumrichtung (Verstellrichtung) veränderbar ist, um die Lage bzw. Position des Formeinsatzes an dem einen Werkzeugteil einzustellen.

Dabei begrenzt der Formeinsatz - bei geschlossener Position des einen Werkzeugteiles - in seinen mittels des mindestens einen Längenänderungselementes einstellbaren Positionen an dem einen Werkzeugteil den Formraum jeweils derart, dass dieser durch den Formeinsatz dichtend verschlossen ist. Das heißt, die Einstellbarkeit des Formeinsatzes soll nicht einfach dazu dienen, diesen in nur genau eine vorgegebene, etwa durch einen Anschlag definierte Position an dem einen Werkzeugteil überführen zu können. Vielmehr soll der Formeinsatz mittels des mindestens einen Längenänderungselementes in eine Mehrzahl unterschiedlicher Positionen an dem einen Werkzeugteil überführbar sein, in denen er jeweils den zugeordneten Formraum bestimmungsgemäß begrenzt und dichtend verschließt, so dass hierin eine Spritzgussmasse aufgenommen und hieraus ein Spritzgussteil hergestellt werden kann.

Die Erfindung ermöglicht es, durch gezielte Positionierung des an dem einen Werkzeugteil vorgesehenen Formeinsatzes (mittels des Längenänderungselementes) die Abmessungen eines in dem durch jenen Formeinsatz abschnittsweise begrenzten Formraum hergestellten Kunststoffteiles entlang der besagten Raumrichtung(en) hochgenau zu justieren. Hierzu kann beispielsweise vorgesehen sein, dass die Änderung der Ausdehnung des Längenänderungselementes, welche eine Einstellung der Position des Formeinsatzes zur Folge hat, durch eine mit dem Längenänderungselement gekoppelte Steuereinrichtung gesteuert wird. So kann die Ausdehnung des Längenänderungselementes derart gewählt werden, dass die in dem durch den Formeinsatz begrenzten Formraum hergestellten Kunststoffteile im Rahmen der Messgenauigkeit die erforderlichen Abmessungen entlang der relevanten Raumrichtung aufweisen.

Das eine (erste) Werkzeugteil wird dabei insbesondere durch eine auswerferseitige Werkzeughälfte einer Spritzgussvorrichtung gebildet und das andere (zweite) Werkzeugteil durch eine düsenseitige Werkzeughälfte.

Je nach den Anforderungen an das herzustellende Kunststoffteil können dabei an einem Werkzeugteil ein oder mehrere, jeweils mittels mindestens eines Längenänderungselementes positionierbare, Formeinsätze vorgesehen sein. Für die Positionierung eines Formeinsatzes mittels eines Längenänderungselementes ist es dabei nicht erforderlich, dass sich das jeweilige Längenänderungselement unmittelbar an dem Formeinsatz abstützt. Alternativ kann ein jeweiliges Längenänderungselement auch mittelbar, also über mindestens ein weiteres Bauteil, auf den hierdurch einzustellenden Formeinsatz einwirken.

Dabei kann insbesondere vorgesehen sein, dass sich der Formeinsatz - bei geschlossener Position des einen Werkzeugteiles - in den unterschiedlichen mittels des mindestens einen Längenänderungselementes entlang der Verstellrichtung einstellbaren Positionen jeweils ausschließlich (unmittelbar oder mittelbar) an dem Längenänderungselement bzw. den Längenänderungselementen abstützt. Es soll also entlang der Verstellrichtung insbesondere keine zusätzliche Abstützung an einem Anschlag erfolgen, welcher eine bestimmte Position des Formeinsatzes an dem Formraum entlang seiner Verstellrichtung vorgibt. Vielmehr soll der Formeinsatz entlang seiner Verstellrichtung - im Rahmen der möglichen Änderungen der Ausdehnung des mindestens einen Längenänderungselementes - möglichst frei positionierbar sein, um hierdurch die Abmessungen des Formraumes gezielt einstellen zu können. Somit soll der Formeinsatz, bei geschlossener Position des einen Werkzeugteiles, in den mittels des mindestens einen Längenänderungselementes einstellbaren Positionen insbesondere nicht in Richtung auf den Formraum abgestützt sein.

Ein Längenänderungselement zur Verwendung für ein Spritzgusswerkzeug ist aus der DE 102 16 314 B4 bekannt. Jenes Element dient dazu, um in einem Spritzgusswerkzeug einen Schieber quer zur Entformungsachse des Spritzgusswerkzeugs zu positionieren und hierdurch Schieberabdrücke an einem herzustellenden Kunststoffteil zu vermeiden. Hieraus ist aber nichts im Hinblick darauf zu entnehmen, erfindungsgemäß einen zusätzlichen Formeinsatz eines Werkzeugteiles gezielt so positionieren zu können, dass eine hochpräzise Herstellung von Kunststoffformteilen ermöglicht wird.

Dies gilt entsprechend für die WO 2005/102649 A1, gemäß der ebenfalls ein piezoelektrisches Element genutzt wird, um einen Schieber quer zur Entformungsachse einer Spritzgussvorrichtung zu bewegen, wobei es hier darum geht, den Schieber gegen eine Begrenzungswand eines Werkzeugteiles der Spritzgussvorrichtung zu pressen.

Gemäß einer Ausführungsform der vorliegenden Erfindung ist die Lage bzw. Position des mindestens einen Formeinsatzes bezüglich des zugehörigen einen Werkzeugteiles ausschließlich durch das mindestens eine Längenänderungselement einstellbar.

Weiterhin kann die Lage des Formeinsatzes mittels des mindestens einen Längenänderungselementes insbesondere entlang der Entformungs- bzw. Verfahrachse der Spritzgussvorrichtung einstellbar sein.

Für die Einwirkung auf den Formeinsatz kann sich das jeweilige Längenänderungselement einerseits (unmittelbar oder mittelbar) an jenem Formeinsatz abstützen und andererseits an einem gemeinsam mit dem zugehörigen einen Werkzeugteil verfahrbaren Stützbereich, zum Beispiel an einem Bereich an einer jenes Werkzeugteil tragenden Aufspannplatte.

Die Abstützung des jeweiligen Längenänderungselementes an seiner dem Formeinsatz abgewandten Seite kann dabei an einem Bauteil erfolgen, das in der geschlossenen Position des zugehörigen einen Werkzeugteiles nicht an den Formraum grenzt, wie der vorstehend erwähnten Aufspannplatte.

Das jeweilige Längenänderungselement ist insbesondere längsverstellbar bzw. längsverschiebbar an dem einen Werkzeugteil gelagert, z.B. mittels einer geeigneten (Längs-)Führung.

Vorliegend geht es um die hochgenaue Einstellung der Lage des Formeinsatzes bezüglich des einen Werkzeugteiles in einem sehr begrenzten Bereich, zum Beispiel indem die Einstellbarkeit des Formeinsatzes bezüglich des zugehörigen einen Werkzeugteiles durch Lageänderungen des jeweiligen Längenänderungselementes (je nach Art des Längenänderungselementes) auf maximale Lageänderungen von etwa 0.1 mm bis 2 mm, insbesondere auf 0.25mm, 0.5mm, 1.0mm oder 1.5 mm, begrenzt ist.

Das jeweilige Längenänderungselement besteht vorteilhaft aus einem Material, das eine wiederholte, reproduzierbare Einstellung der Lage des Formeinsatzes durch Einwirkung auf das Längenänderungselement gestattet. Hierzu kann das Längenänderungselement beispielsweise als ein piezoelektrisches Element ausgeführt sein, das bei Bestromung seine Ausdehnung entlang mindestens einer Raumrichtung ändert. Weiterhin kann das Längenänderungselement als ein thermisches Element ausgeführt sein, das bei Temperaturänderungen seine Ausdehnung entlang mindestens einer Raumrichtung ändert. Auch ein mehrteiliges, z. B. teleskopierbares, Längenänderungselement kann verwendet werden.

Das jeweilige Längenänderungselement kann dabei insbesondere so zwischen dem zu positionierenden Formeinsatz einerseits und einem weiteren Bauteil bzw. einer dortigen Stützfläche andererseits angeordnet sein, dass das Längenänderungselement den Formeinsatz gegen den im Formraum wirkenden Druck abstützt, wenn dieser mit Spritzgussmasse befüllt wird, während sich das eine Werkzeugteil in seiner geschlossenen Position befindet.

Bei der Herstellung größerer Kunststoffformteile und einer hiermit verbundenen entsprechend großen Krafteinwirkung auf den den Formraum begrenzenden Formeinsatz kann das jeweilige Längenänderungselement beispielsweise über eine Schrägfläche auf den Formeinsatz einwirken, so dass eine Längenänderung des Längenänderungselementes entlang einer ersten Raumrichtung in eine Einstellung der Lage des Formeinsatzes entlang einer hiervon verschiedenen zweiten Raumrichtung umgesetzt wird und als Folge davon das Längenänderungselement wiederum teilweise von dem bei Herstellung eines Kunststoffteiles durch Spritzgießen wirkenden Druck entlastet wird.

Nach einer Variante der Erfindung ist der Formeinsatz ausgebildet und eingerichtet, zumindest abschnittsweise in einen durch das eine und/oder das zweite Werkzeugteil definierten Hohlraum verfahren zu werden, um in der geschlossenen Position des einen Werkzeugteiles gemeinsam mit dem zweiten Werkzeugteil den Formraum (zumindest teilweise) zu begrenzen. Gemäß einer Weiterbildung läuft hierbei an dem Formeinsatz eine Dichtungsbereich, z.B. in Form einer Dichtfläche oder gegebenenfalls auch in Form eines separaten Dichtelementes, um, der mit der Innenwand jenes Hohlraumes dichtend zur Anlage bringbar ist, um den von dem Formeinsatz und dem zweiten Werkzeugteil begrenzten Formraum abzudichten.

Insbesondere für eine symmetrische Krafteinleitung in den Formeinsatz können zwei oder mehr Längenänderungselemente hierauf einwirken, um den Formeinsatz (an dem zugehörigen einen Werkzeugteil) gezielt zu positionieren.

Die Spritzgussvorrichtung kann weiterhin einen Schieber umfassen, der quer zu der Entformungs- bzw. Verfahrachse bewegbar ist, um den Formraum seitlich zu begrenzen. Zudem kann eine Auswerfereinheit vorgesehen sein, die gegebenenfalls mit einer Komponente durch den Formeinsatz hindurch bis zum Formraum ragt, wenn sich das zugehörige eine Werkzeugteil in der geschlossenen Position befindet.

Weitere Einzelheiten und Vorteile der Erfindung werden bei der nachfolgenden Beschreibung eines Ausführungsbeispieles anhand der Figuren deutlich werden.

Das Längenänderungselement kann durch ein Steuergerät angesteuert sein. Dieses kann etwa dazu ausgelegt sein, eine Längenänderung - zum Beispiel im Fall eines piezoelektrischen Längenänderungselementes - durch (variable) Bestromung des Längenänderungselementes herbeizuführen.

Es zeigen:
- Figur 1A: einen Querschnitt durch eine Vorrichtung zum Spritzgießen von Kunststoffformteilen entlang einer ersten Schnittebene;
- Figur 1B: einen Querschnitt gemäß Figur 1A entlang einer zweiten Schnittebene;
- Figur 1C: einen Querschnitt gemäß den Figuren 1A und 1B entlang einer dritten Schnittebene;
- Figur 2: eine teilweise aufgeschnittene Darstellung eines ersten Werkzeugteiles der Vorrichtung aus den Figuren 1A bis 1C;
- Figur 3: einen Ausschnitt des ersten Werkzeugteiles aus Figur 2;
- Figur 4: eine schematische Darstellung des ersten Werkzeugteiles zusammen mit einer Aufspannplatte;
- Figur 5: eine Prinzipdarstellung der wesentlichen Funktionselemente der Vorrichtung aus den Figuren 1 bis 4.

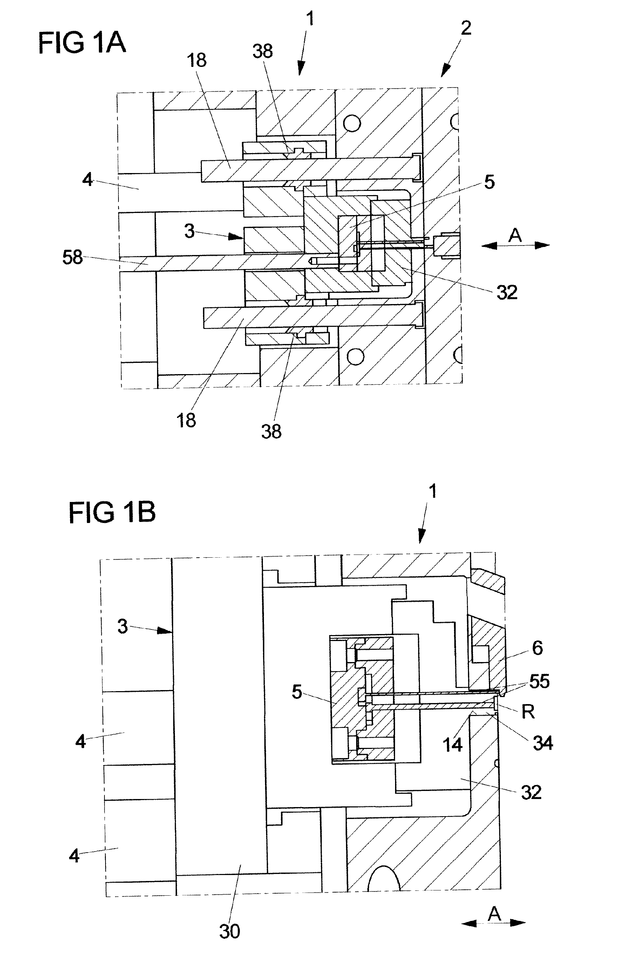

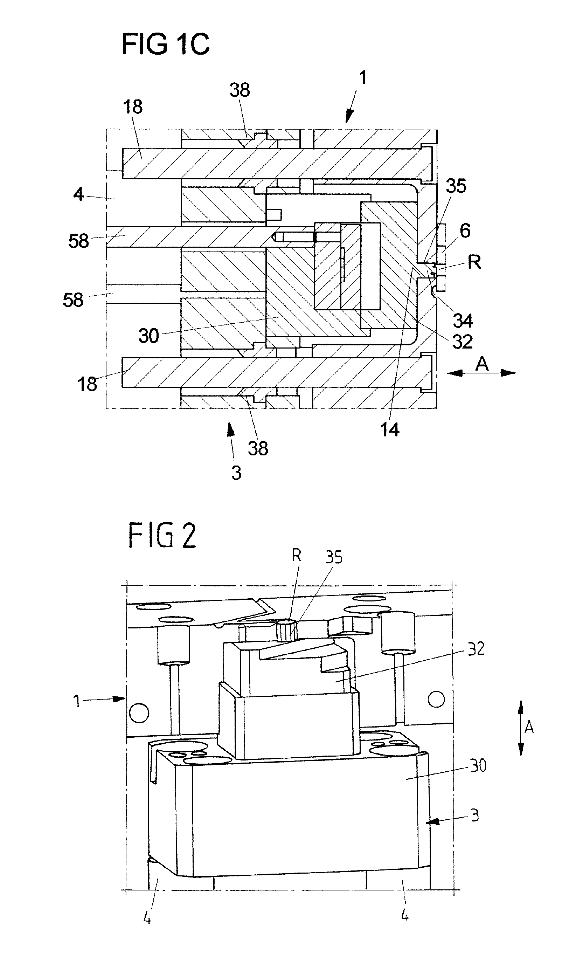

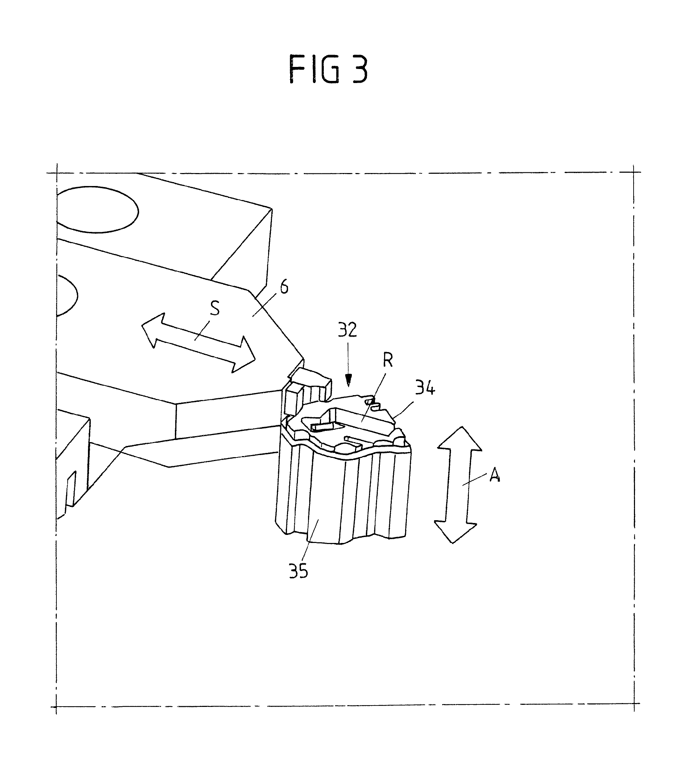

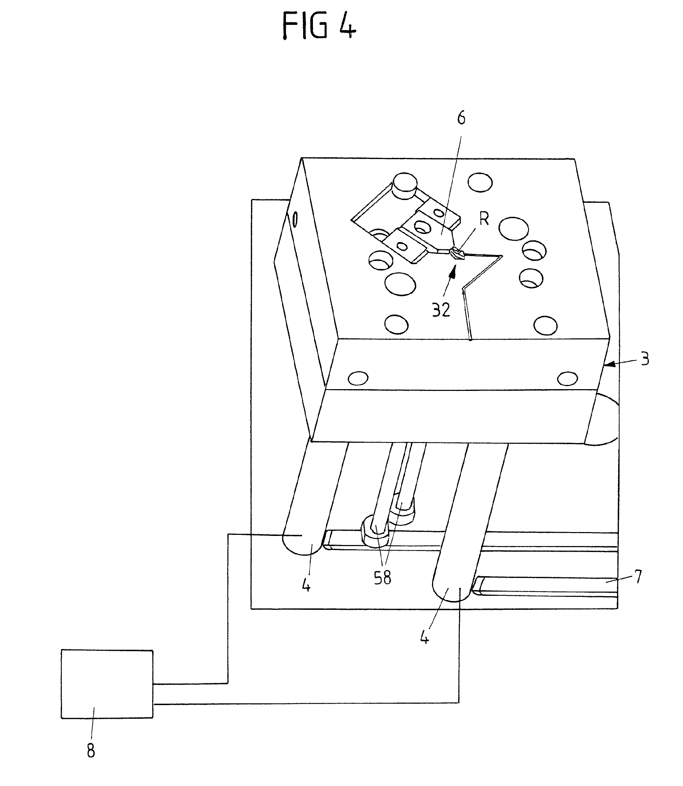

Die in den Figuren 1A bis 1C und 2 gezeigte Vorrichtung zum Spritzgießen von Kunststoffformteilen umfasst gemäß Figur 1A ein erstes Werkzeugteil 1 und ein zweites Werkzeugteil 2, die entlang einer Entformungs- bzw. Verfahrachse A relativ zu einander verfahrbar sind, um einerseits (in einem geschlossenen Zustand) einen in den Figuren 1 B und 1C erkennbaren Formraum R zu begrenzen und andererseits (in einem geöffneten Zustand) den Formraum R freizugeben. Die beiden Werkzeugteile 1, 2 bilden dabei im Ausführungsbeispiel eine auswerferseitige Werkzeughälfte (1) und eine düsenseitige Werkzeughälfte (2). Vorliegend geht es insbesondere um die Ausgestaltung des ersten Werkzeugteiles 1; dementsprechend ist das zweite Werkzeugteil 2 in den Figuren 1B, 1C und 2 nicht mit dargestellt. Und in den weiteren Figuren 3 und 4 ist zudem auch das erste Werkzeugteil 1 zumindest teilweise nicht mit dargestellt, um die relevanten Bereiche der verstellbaren Baugruppe 3 allseitig erkennbar zu machen.

An dem ersten Werkzeugteil 1 ist eine relativ hierzu begrenzt verstellbare Baugruppe 3 gelagert. Diese umfasst einen auf einem Basisteil 30 angeordneten Formeinsatz 32 mit einem (im geschlossenen Zustand der Werkzeugteile 1, 2) an den Formraum R angrenzenden Endabschnitt 34. Die verstellbare Baugruppe 3 ist über eine Führungseinrichtung 18, 38 an dem ersten Werkzeugteil 1 geführt. Die Führungseinrichtung 18, 38 umfasst im Ausführungsbeispiel an dem ersten Werkzeugteil 1 angeordnete Bolzen 18 sowie an der bewegbaren Baugruppe 3 vorgesehene Buchsen 38, die jeweils einem der Bolzen 18 zugeordnet sind. Hierdurch wird eine definierte Längsführung der bewegbaren Baugruppe 3 relativ zu dem ersten Werkzeugteil 1 ermöglicht.

Im Ausführungsbeispiel fällt die Richtung, entlang welcher die bewegbare Baugruppe 3 relativ zu dem ersten Werkzeugteil 1 bewegbar ist (Verstellrichtung), mit der Entformungs- bzw. Verfahrachse A zusammen, entlang welcher die beiden Werkzeugteile 1, 2 relativ zueinander verfahrbar sind, um den Formraum R zu begrenzen bzw. freizugeben.

Der zur teilweisen Begrenzung des Formraumes R dienende Endabschnitt 34 des Formeinsatzes 32 (welcher in der geschlossenen Stellung der beiden Werkzeugteile 1, 2 dem zweiten Werkzeugteil 2 unmittelbar gegenüber liegt) ist in einem zugeordneten Hohlraum 14 des ersten Werkzeugteiles 1 geführt. Im Ausführungsbeispiel weist der Endabschnitt 34 eine umlaufende, z.B. zylindrische, Außenwand und der Hohlraum 14 eine hierzu passende, den Hohlraum 14 umschließende, z.B. einen Hohlzylinder bildende, Innenwand auf. Zur Abdichtung des Formraumes R läuft an der Außenwand des Endabschnittes 34 ein in den Figuren 2 und 3 erkennbarer Dichtbereich 35, z.B. in Form einer Dichtfläche, um, mit dem der Endabschnitt 34 dichtend an der Innenwand des Hohlraumes 14 anliegt. Hierdurch ist der Formraum R zum ersten Werkzeugteil 1 (einschließlich der verstellbaren Baugruppe 3) hin abgedichtet.

Die Innenwand des Hohlraumes 14 definiert vorliegend die äußere Kontur eines im Formraum R herzustellenden Kunststoffformteiles, während der Formeinsatz 32, insbesondere die dem Formraum R zugewandte Seite seines Endabschnittes 34, die innere Struktur des herzustellenden Formteiles bestimmt.

Zur Begrenzung des Formraumes R ist weiterhin ein in den Figuren 1B, 1C, 3 und 4 erkennbarer Schieber 6 vorgesehen, der entlang einer quer zur Entformungs- bzw. Verfahrachse A verlaufenden Schieberachse S (vergleiche Figur 3) bewegbar ist, um den Formraum R seitlich zu begrenzen oder freizugeben.

An der am ersten Werkzeugteil 1 gelagerten beweglichen Baugruppe 3 ist zusätzlich zu dem Formeinsatz 32 eine Auswerfereinheit 5 angeordnet, die mit längserstreckten Fortsätzen 55 den Formeinsatz 32 durchgreift und an den Formraum R grenzt bzw. gegebenenfalls geringfügig in diesen hineinragt. Zur Betätigung der Auswerfereinheit 5 dienen Betätigungselemente 58, die von der verstellbaren Baugruppe 3 (entlang einer Richtung weg von dem zweiten Werkzeugteil 2) abstehen.

Zur Einwirkung auf die verstellbare Baugruppe 3 und damit insbesondere auf den Formeinsatz 32, um dessen Position bezüglich des ersten Werkzeugteiles 1 einstellen zu können, dient mindestens ein (längserstrecktes) Längenänderungselement 4, wobei im Ausführungsbeispiel zwei Längenänderungselemente 4 vorgesehen sind. Ein jeweiliges Längenänderungselement 4 ist so ausgeführt, dass es seine Ausdehnung entlang mindestens einer Raumrichtung (insbesondere der Richtung seiner Längserstreckung), vorliegend entlang der Entformungs- bzw. Verfahrachse A, ändern kann, um die verstellbare Baugruppe 3 und somit den Formeinsatz 32 entlang dieser Richtung gezielt zu positionieren, also deren Lage bezüglich des ersten Werkzeugteiles 1 einzustellen. Hier ist ein jeweiliges Längenänderungselement 4 als ein Piezo-Element (Piezo-Aktuator) ausgebildet, das seine Ausdehnung bei Bestromung ändert.

Dabei stützt sich ein jeweiliges Längenänderungselement 4 einerseits an der verstellbaren Baugruppe 3 und andererseits an einer Stützfläche ab, die gemeinsam mit dem ersten Werkzeugteil 1 entlang der Entformungs- bzw. Verfahrachse A verfahrbar ist, die aber bei einer Einstellung der Position der verstellbaren Baugruppe 3 und damit insbesondere des Formeinsatzes 32 nicht mitgenommen wird. Im Ausführungsbeispiel stützt sich ein jeweiliges Längenänderungselement 4 mit seinem der einstellbaren Baugruppe 3 und damit dem Formeinsatz 32 abgewandten Ende an einer Stützfläche ab, die an einer Aufspannplatte 7 vorgesehen ist. Die Aufspannplatte 7 dient dabei als Träger für das erste Werkzeugteil 1, welches dementsprechend mit der Aufspannplatte 7 verbunden ist; die Aufspannplatte 7 gehört jedoch nicht zu den den Formraum R begrenzenden Teilen der Spritzgussvorrichtung.

Insbesondere anhand der Figuren 1A bis 1C und 2 wird weiter deutlich, dass sich das jeweilige Längenänderungselement 4 aufseiten der verstellbaren Baugruppe 3 nicht unmittelbar an deren Formeinsatz 32 abstützt, sondern vielmehr an einem den Formeinsatz 32 tragenden Basisteil 30. Entscheidend ist lediglich, dass eine Änderung der Ausdehnung eines jeweiligen Längenänderungselementes 4 entlang mindestens einer Raumrichtung, im Ausführungsbeispiel z.B. entlang der Entformungs- bzw. Verfahrachse A, zu einer Einstellung der Position bzw. Lage des Formeinsatzes 32 bezüglich des ersten Werkzeugteiles 1 führt. Ein jeweiliges Längenänderungselement 4 nimmt weiterhin die im Betrieb der Spritzgussvorrichtung am Formeinsatz 32 wirkenden Druckkräfte teilweise auf und leitet diese in die Aufspannplatte 7 ab.

Wie in Figur 4 erkennbar, ist ein jeweiliges Längenänderungselement 4 zur Ansteuerung (elektrisch) mit einer Steuereinheit 8 verbunden. Hiermit kann das jeweilige Längenänderungselement 4 gezielt mit elektrischer Spannung bzw. elektrischem Strom versorgt werden, um (auf der Grundlage des piezoelektrischen Effektes) eine definierte Längenänderung des jeweiligen (längserstreckten) Längenänderungselementes 4 herbeizuführen, die wiederum zu einer entsprechenden Veränderung der Position der Einstellbaren Baugruppe 3 und damit des Formeinsatzes 32 entlang der relevanten Raumrichtung (A) führt.

Die für einen jeweiligen Spritzgussprozess optimale Ausdehnung eines jeweiligen Längenänderungselementes und die hiermit korrespondierende Einstellung der Steuereinheit 8 lässt sich beispielsweise dadurch ermitteln, dass durch Einfüllen von Spritzgussmasse (in Form plastifizierten Kunststoffes) in den Formraum R ein Kunststoffformteil erzeugt und dieses anschließend vermessen wird, wobei dieser Vorgang so oft unter jeweiliger Korrektur der relevanten Ausdehnung des Längenänderungselementes bzw. der Längenänderungselemente 4 mittels der Steuereinheit 8 wiederholt wird, bis das hergestellte Kunststoffformteil die gewünschte Abmessung entlang der maßgeblichen Raumrichtung (A) aufweist.

Sofern mehrere Längenänderungselemente 4 zur Einstellung der Position bzw. Lage der verstellbaren Baugruppe 3 und damit des Formeinsatzes 32 bezüglich des ersten Werkzeugteiles 1 vorgesehen sind, können diese nach einer ersten Ausführungsform (insbesondere im Hinblick auf Material, Geometrie und Abmaße) identisch aufgebaut sein, um eine identische Ausdehnung eines jeweiligen Längenänderungselementes 4 entlang der relevanten Raumrichtung bei einer vorgegebenen Einstellung der Steuereinheit 8 zu gewährleisten. Alternativ kann aber auch vorgesehen sein, unabhängig ansteuerbare und gegebenenfalls unterschiedlich ausgestaltete Längenänderungselemente vorzusehen; je nach den Anforderungen an die Einstellbarkeit der verstellbaren Baugruppe 3 und damit des Formeinsatzes 32 im jeweiligen Einzelfall.

Anstelle des piezoelektrischen Effektes können auch andere physikalische oder chemische Effekte genutzt werden, um eine Änderung der Ausdehnung eines Längenänderungselementes zu bewirken. So kann ein jeweiliges Längenänderungselement beispielsweise als ein thermisches Längenänderungselement ausgeführt sein, dessen Ausdehnung von der Temperatur abhängig ist und durch Temperaturänderungen gezielt gewählt werden kann.

Vorliegend geht es um die hochgenaue Positionierung der verstellbaren Baugruppe 3 und damit des Formeinsatzes 32 bezüglich des ersten Werkzeugteiles 1, um die Abmessungen eines im Formraum R herzustellenden Kunststoffformteiles entlang mindestens einer Raumrichtung (A) gezielt einzustellen. Die Anforderungen an ein geeignetes Längenänderungselement betreffen daher vor allem die Möglichkeit, dessen Ausdehnung entlang der maßgeblichen Raumrichtung hochgenau und reproduzierbar einstellen zu können, was beispielsweise durch piezoelektrische oder thermische Längenänderungselemente gewährleistet werden kann. Die Amplitude der möglichen Ausdehnungsänderung, also der Bereich, innerhalb dessen die Ausdehnung des jeweiligen Längenänderungselementes entlang der maßgeblichen Raumrichtung (A) veränderbar ist, spielt demgegenüber eine geringere Rolle. Denn es geht ja um kleine Korrekturen der Positionierung eines Formeinsatzes an einem Werkzeugteil. So kann der Bereich der maximal möglichen Ausdehnungsänderung eines jeweiligen Längenänderungselementes 4 entlang der maßgeblichen Raumrichtung (A) beispielsweise bei maximal 0.1 mm bis maximal 2 mm liegen, insbesondere bei maximal 0.2 mm, 0.3 mm, 0.5 mm oder 1.0 mm.

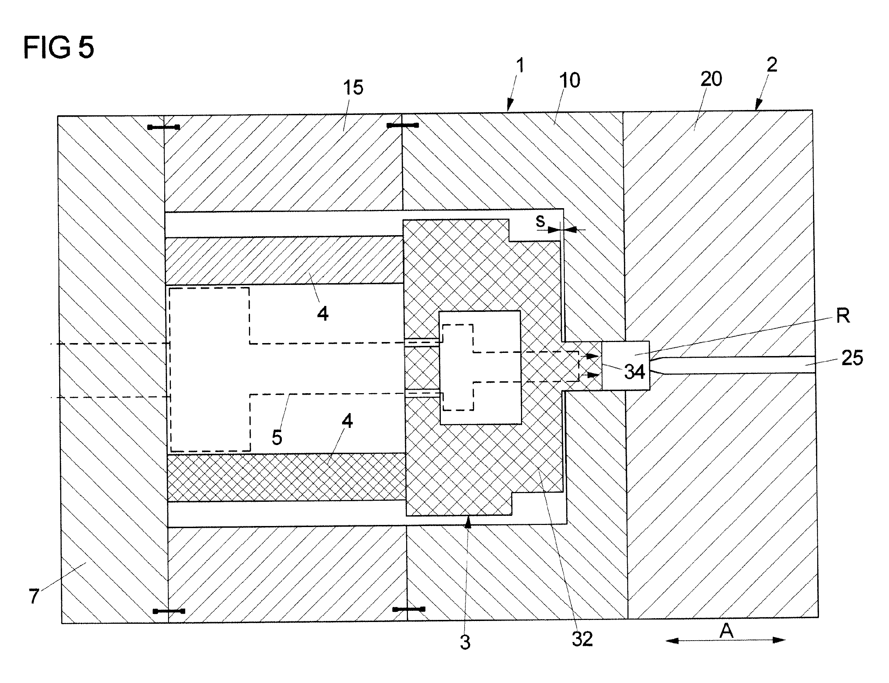

Die wesentlichen Elemente der vorstehend anhand der Figuren 1 bis 4 beschriebenen Vorrichtung sowie deren Funktion seien nachfolgend nochmals anhand Figur 5 verdeutlicht. Gemäß Figur 5 umfasst die Vorrichtung zum Spritzgießen von Kunststoffformteilen ein erstes Werkzeugteil 1 (hier in Form einer auswerferseitigen Werkzeughälfte) und ein zweites Werkzeugteil 2 (hier in Form einer düsenseitigen Werkzeughälfte), die entlang einer Verfahrachse A relativ zueinander verfahrbar sind, um einen Formraum R zu begrenzen bzw. freizugeben. Zur Zufuhr von Spritzgussmasse in den Formraum R ist dabei in dem zweiten Werkzeugteil 2 ein Kanal 25 ausgebildet.

Das erste Werkzeugteil 1 ist vorliegend (fest) an einer Aufspannplatte 7 angeordnet, mit der über Distanzleisten 15 ein Formstempel 10 fest verbunden ist, welcher - ebenso wie ein am zweiten Werkzeugteil 2 ausgebildeter Formstempel 20 - zur Begrenzung des Formraumes R dient. Aufseiten des ersten Werkzeugteiles 1 bzw. des zum ersten Werkzeugteil 1 gehörenden Formstempels 10 wird dabei die Begrenzung des Formraumes R teilweise durch den vorstehend anhand der Figuren 1 bis 4 beschriebenen, mittels der Längenänderungselemente 4 entlang einer Verstellrichtung (Verfahrachse A) verstellbaren Formeinsatz 32 bzw. dessen an den Formraum R angrenzenden Endabschnitt 34 übernommen.

Ein jeweiliges Längenänderungselement 4 ist dabei während eines Spritzgusszyklus jeweils durchgehend aktiviert, so dass es eine bestimmte, vorgebbare Länge einnimmt. Im Fall eines piezoelektrischen Längenänderungselementes bedeutet dies, dass das jeweilige Längenänderungselement mit einer bestimmten Spannung bzw. einem bestimmten Strom beaufschlagt ist. Hierdurch werden die Länge des jeweiligen Längenänderungselementes 4 und damit im Ergebnis die Position des Formeinsatzes 32 entlang seiner Verstellrichtung sowie die Ausdehnung des Formraumes R entlang jener Richtung (A) festgelegt.

Von Bedeutung ist dabei, dass sich der Formeinsatz 32 (als Bestandteil der bewegbaren Baugruppe 3) mittels der zugeordneten Längenänderungselemente 4 entlang seiner Verstellrichtung (Verfahrachse A) frei verstellen lässt, um die Lage der durch den Formeinsatz 32 bzw. dessen Endabschnitt 34 gebildeten Grenze des Formraumes R einstellen zu können. Dies bedeutet vorliegend insbesondere, dass die bestimmungsgemäße Position des Formeinsatzes 32 entlang seiner Verstellrichtung A nicht durch einen Anschlag vorgegeben ist. Vielmehr wird diese Position durch die Längenänderungselemente 4 flexibel eingestellt.

Letzteres ist anhand Figur 5 auch dadurch erkennbar, dass zwischen dem Formeinsatz 32 und dem daran entlang der Verstellrichtung (A) zu dem Formraum R hin angrenzenden Abschnitt des ersten Werkzeugteiles 1 bzw. genauer des Formstempels 10 ein Spalt S vorgesehen ist, welcher bei bestimmungsgemäßer Anordnung des Formeinsatzes 32 bezüglich des Formraumes R - im Rahmen der Einstellbarkeit mittels der Längenänderungselemente 4 - nicht vollständig geschlossen wird. Das heißt, die Positionierung des Formeinsatzes 32 in Richtung auf den Formraum R durch die Längenänderungselemente 4 wird nicht durch einen etwaigen Anschlag der Spritzgussvorrichtung festgelegt (an welchem der Formeinsatz 32 anläge, wenn er sich in seiner bestimmungsgemäßen Position bezüglich des Formraumes R befindet); sondern der Formeinsatz 32 kann frei in einer Mehrzahl unterschiedlicher Positionen an den Formraum R angrenzen, welche jeweils durch die Längenänderungselemente 4 vorgegeben werden. In jeder dieser Positionen dichtet der Formeinsatz 32 bzw. dessen Endabschnitt 34 den Formraum R so ab, dass hierin eine Spritzgussmasse zur Herstellung eines Spritzgussteiles dichtend aufgenommen werden kann.

Figur 5 zeigt außerdem (in gestrichelten Linien) schematisch eine Auswerfereinheit 5, mittels der ein in dem Formraum R hergestelltes Spritzgussteil freigebbar ist.

## Patentansprüche

1. Vorrichtung zum Spritzgießen von Kunststoffteilen, mit einem Werkzeugteil (1), das zur Bildung eines mit Spritzgussmasse befüllbaren Formraumes (R) sowie zur Freigabe eines in dem Formraum (R) erzeugten Kunststoffteiles relativ zu einem zweiten Werkzeugteil (2) entlang einer Verfahrachse (A) zwischen einer geschlossenen und einer geöffneten Position verfahrbar ist,
**dadurch gekennzeichnet, dass** an dem einen Werkzeugteil (1) mindestens ein Formeinsatz (32) verstellbar gelagert ist, der gemeinsam mit dem einen Werkzeugteil (1) entlang der Verfahrachse (A) relativ zu dem zweiten Werkzeugteil (2) verfahrbar ist und der in der geschlossenen Position des einen Werkzeugteiles (1) den Formraum (R) abschnittsweise begrenzt, und dass der Formeinsatz (32) mit mindestens einem Längenänderungselement (4) in Verbindung steht, dessen Ausdehnung entlang mindestens einer Verstellrichtung veränderbar ist, um die Position des Formeinsatzes (32) an dem einen Werkzeugteil (1) einzustellen, wobei der Formeinsatz (32) bei geschlossener Position des einen Werkzeugteiles (1) in mehreren mittels des mindestens einen Längenänderungselementes (4) einstellbaren, unterschiedlichen Positionen an dem einen Werkzeugteil (1) den Formraum (R) jeweils derart begrenzt, dass der Formraum (R) durch den Formeinsatz (32) dichtend verschlossen ist.

2. Vorrichtung nach Anspruch 1, **dadurch gekennzeichnet, dass** der Formeinsatz (32) bei geschlossener Position des einen Werkzeugteiles (1) in den mittels des mindestens einen Längenänderungselementes (4) einstellbaren Positionen entlang der Verstellrichtung jeweils lediglich über das mindestens eine Längenänderungselement (4) abgestützt ist.

3. Vorrichtung nach Anspruch 1 oder 2, **dadurch gekennzeichnet, dass** der Formeinsatz (32) bei geschlossener Position des einen Werkzeugteiles (1) in den mittels des mindestens einen Längenänderungselementes (4) einstellbaren Positionen in Richtung auf den Formraum (R) nicht abgestützt ist.

4. Vorrichtung nach einem der vorhergehenden Ansprüche, **dadurch gekennzeichnet, dass** der Formeinsatz (32) ausschließlich mittels des mindestens einen Längenänderungselementes (4) relativ zu dem einen Werkzeugteil (1) verstellbar ist

5. Vorrichtung nach einem der vorhergehenden Ansprüche, **dadurch gekennzeichnet, dass** die Position des Formeinsatzes (32) mittels des mindestens einen Längenänderungselementes (4) entlang der Verfahrachse (A) einstellbar ist.

6. Vorrichtung nach einem der vorhergehenden Ansprüche, **dadurch gekennzeichnet, dass** sich das Längenänderungselement (4) einerseits an dem Formeinsatz (32) oder einem gemeinsam mit dem Formeinsatz (32) einstellbaren Element (30) und andererseits an einem zusammen mit dem einen Werkzeugteil (1) verfahrbaren Stützbereich abstützt.

7. Vorrichtung nach Anspruch 6, **dadurch gekennzeichnet, dass** sich das Längenänderungselement (4) an einem Stützbereich eines Bauteiles (7) abstützt, das in der geschlossenen Position des einen Werkzeugteiles (1) nicht an den Formraum (R) grenzt.

8. Vorrichtung nach einem der vorhergehenden Ansprüche, **dadurch gekennzeichnet, dass** die mittels des mindestens einen Längenänderungselementes (4) erreichbare Einstellbarkeit der Position des Formeinsatzes (32) bezüglich des einen Werkzeugteiles (1) auf Lageänderungen bis 2.0 mm entlang der Verstellrichtung begrenzt ist.

9. Vorrichtung nach einem der vorhergehenden Ansprüche, **dadurch gekennzeichnet, dass** das Längenänderungselement (4) aus einem Material besteht, das eine wiederholte, reproduzierbare Einstellung der Position des Formeinsatzes (32) durch Einwirkung auf das Längenänderungselement (4) gestattet.

10. Vorrichtung nach einem der vorhergehenden Ansprüchen, **dadurch gekennzeichnet, dass** das Längenänderungselement (4) als ein piezoelektrisches Längenänderungselement ausgeführt ist.

11. Vorrichtung nach einem der vorhergehenden Ansprüche, **dadurch gekennzeichnet, dass** das mindestens eine Längenänderungselement (4) den Formeinsatz (32) gegen den in dem Formraum (R) wirkenden Druck abstützt, wenn der Formraum (R) mit Spritzgussmasse befüllt wird, während sich das eine Werkzeugteil (1) in der geschlossenen Position befindet.

12. Vorrichtung nach einem der vorhergehenden Ansprüche, **dadurch gekennzeichnet, dass** der Formeinsatz (32) ausgebildet und eingerichtet ist, zumindest abschnittsweise in einen durch das eine und/oder durch das zweite Werkzeugteil (1, 2) definierten Hohlraum (14) verfahren zu werden, um in der geschlossenen Position des einen Werkzeugteiles (1) gemeinsam mit dem zweiten Werkzeugteil (2) den Formraum (R) zu begrenzen.

13. Vorrichtung nach Anspruch 13, **dadurch gekennzeichnet, dass** am Formeinsatz (32) ein Dichtbereich (35) umläuft, der mit der Innenwand des Hohlraums (14) dichtend zur Anlage bringbar ist, um den Formraum (R) abzudichten.

14. Vorrichtung nach einem der vorhergehenden Ansprüche, **dadurch gekennzeichnet, dass** auf den Formeinsatz (32) mindestens zwei voneinander beabstandete Längenänderungselemente (4) einwirken.

15. Vorrichtung nach einem der vorhergehenden Ansprüche, **gekennzeichnet durch** eine Auswerfereinheit (5), die gemeinsam mit dem Formeinsatz (32) bewegbar ist und die mindestens eine **durch** den Formeinsatz (32) hindurch bis zum Formraum (R) ragende Komponente (55) aufweist.
